# EUROPEAN PATENT SPECIFICATION

(11) **EP 3 317 550 B1**
(45) Date of publication and mention of the grant of the patent: **15.04.2020**
(21) Application number: 16818343.2
(22) Date of filing: 29.06.2016
(51) Int. Cl.: A47C 5/10, A47C 4/02, A47C 7/30, A47C 19/00, A47C 19/02, F16B 12/52, F16B 12/14

(54) **UPHOLSTERED SEATING FURNITURE FRAME**
RAHMEN FÜR EIN GEPOLSTERTES SITZMÖBEL
CADRE DE MEUBLE D'ASSISE REMBOURRÉ

(30) Priority: 02.07.2015 SE 1550951
(43) Date of publication of application: 09.05.2018
(73) Proprietor: IKEA Supply AG, 4133 Pratteln (CH)
(72) Inventor: EJDEMO, Johan, 227 36 Lund (SE)
(74) Representative: Ström & Gulliksson AB
(86) International application number: PCT/SE2016/050658
(87) International publication number: WO 2017/003360

(56) References cited:
- EP-A1- 1 969 968
- DE-A1- 2 156 497
- DE-B3-102013 107 034
- DE-C- 657 801
- FR-A- 1 065 990
- FR-A- 1 065 990
- US-A- 5 522 101
- US-A- 5 649 742
- US-B1- 6 241 317

## Description

### Field of the Invention

The present invention relates to an upholstered seating furniture frame comprising a seat frame part and at least a first leg part connectable to the seat frame part. The present invention further relates to an upholstered seating piece of furniture, and a method of mounting an upholstered seating furniture frame.

### Background of the Invention

Upholstered seating furniture, such as upholstered sofas and upholstered armchairs, is a type of furniture that is often very heavy and very space consuming, also when the upholstered sofa is held in stock at a store, and when the upholstered sofa is transported from the store to somebody's home.

EP 2374374 discloses a modular upholstered sofa in which backrest modules and side panels are each provided with a locking plate having a special locking insert, which is connectable to a special locking profile forming part of a central frame. However, also this sofa arrangement is very space consuming and heavy.

DE 2 156 497 discloses a sofa in which a solid material cylinder is in a first step bolted to a leg. A frame part is then slid onto the solid material cylinder. A mounting bolt is then screwed upwards into the wall of the solid cylinder to mount the frame part to the leg. FR1065990A discloses a seating furniture with a known connecting structure.

### Summary of the Invention

An object of the present invention is to provide an upholstered seating furniture frame which is easy to put together, takes little space and has a low weight.

This object is achieved by means of an upholstered seating furniture frame comprising a seat frame part and at least a first leg part connectable to the seat frame part, wherein the seat frame part comprises a seat frame structure which is at least partly made from hollow tubes, wherein at least one of the seat frame part and the first leg part comprises a supporting device adapted for alignment and temporary connection of the at least one of the seat frame part and the first leg part to the other of the seat frame part and the first leg part, the supporting device comprising an insertion portion arranged on one of the seat frame part and the first leg part and adapted for insertion into the other of the seat frame part and the first leg part to align and hold the first leg part mounted to the seat frame part in a self-standing intermediate assembly state, and that at least one of the seat frame part and the first leg part comprises at least portions of a final connecting device comprising: i) a mounting plate comprising a bore being parallel with a sitting plane of the seat frame part, the mounting plate being arranged in one of the seat frame part and the first leg part, ii) an opening arranged in the other of the seat frame part and the first leg part, and iii) a final connection mounting rod arranged to co-operate with the opening and with the bore arranged in the mounting plate, the rod being arranged for tightening to cause a tightening force on the seat frame part and the first leg part acting along the longitudinal direction of the rod for final connection of the first leg part to the seat frame part and transforming the self-standing intermediate assembly state into a self-standing ready-to-use state.

An advantage of this invention is that a single person may easily assembly the upholstered seating furniture frame since it is of lightweight, and since the arrangement of the seat frame and the first leg part makes it easy to put the parts together. Furthermore, a strong connection between the seat frame part and the first leg part is achieved, with limited, if any, play between the seat frame part and the first leg part.

By "self-standing intermediate assembly state" is meant a state in which the connection between first leg part and seat frame part is strong enough to make the assembled construction bear its own weight in a free standing position, but the assembled construction is not able to carry the load to which the seating furniture is exposed in its intended use as, e.g., a sofa. By "self-standing ready-to-use state" is meant a state in which the connection between first leg part and seat frame part is strong enough to carry the load to which the seating furniture is exposed in its intended use as, e.g., a sofa.

According to one embodiment the supporting device is at least partly separate from the final connecting device. An advantage of this embodiment is that it becomes easier to mount the furniture frame.

According to one embodiment the supporting device and the final connecting device co-operate in the final connection of the first leg part to the seat frame. An advantage of this embodiment is that the connection between leg part and seat frame part becomes even stronger.

According to one embodiment the supporting device comprises an insertion portion arranged on one of the seat frame part and the first leg part and adapted for insertion into the other of the seat frame part and the first leg part. An advantage of this embodiment is that it provides for simple, yet stable connection between the seat frame part and the first leg part.

According to one embodiment the insertion portion is permanently fixed to that one of the seat frame part and the first leg part on which the insertion portion is arranged. An advantage of this embodiment is that mounting becomes easier, because the insertion portion is already fixed in a correct position.

According to one embodiment the mounting plate is arranged in the hollow interior of a hollow tube of the seat frame part, and wherein the opening is arranged on the first leg part. This provides for a strong connection between the seat frame part and the first leg part, with little play, and also makes it easy to tighten the connection to a desired degree.

According to one embodiment the bore of the mounting plate is a threaded bore adapted to cooperate with a threaded stem of the rod. This provides for simple and efficient tightening of the connection between seat frame part and leg part.

According to one embodiment the final connection mounting rod is a bolt, wherein the opening arranged in the other of the seat frame part and the leg part is smaller than a head of the bolt and is adapted to co-operate with the head during tightening of the bolt. An advantage of this embodiment is that it involves a machine element, the bolt with a head, which is cost efficient, has a high strength and is easy to apply for a person mounting the furniture frame.

According to one embodiment the longitudinal direction of the final connection mounting rod coincides, in the self-standing ready-to-use state, with the longitudinal direction of a hollow tube of the seat frame part, to which hollow tube the rod is connected via the mounting plate or the opening being arranged therein. An advantage of this embodiment is that a very strong connection of the seat frame part to the leg part is obtained, as forces acting on the rod will be transferred along the longitudinal direction of the hollow tube, which is a direction of high strength. Even more preferably the longitudinal direction of the final connection mounting rod coincides, in the self-standing ready-to-use state, with the longitudinal direction of a hollow tube being a front seat frame bar of the seat frame part, to which front seat frame bar the rod is connected via the mounting plate or the opening being arranged therein. An advantage of this embodiment is that the front seat frame bar, which usually receives the highest strain when the upholstered furniture is used, is securely tightened to the first leg part.

According to one embodiment the frame comprises a second leg part adapted to be connected to the seat frame part at an opposite end thereof, compared to the first leg part, wherein at least one of the seat frame part and the second leg part comprises a supporting device adapted for alignment and temporary connection of the at least one of the seat frame part and the second leg part to the other of the seat frame part and the second leg part, the supporting device comprising an insertion portion arranged on one of the seat frame part and the second leg part and adapted for insertion into the other of the seat frame part and the second leg part to align and hold the second leg part mounted to the seat frame part in a self-standing intermediate assembly state, and that at least one of the seat frame part and the second leg part comprises a final connecting device comprising: i) a mounting plate comprising a bore being parallel with a sitting plane of the seat frame part, the mounting plate being arranged in one of the seat frame part and the second leg part, ii) an opening arranged in the other of the seat frame part and the second leg part, and iii) a final connection mounting rod arranged to co-operate with the opening and with the bore arranged in the mounting plate, the rod being arranged for tightening to cause a tightening force on the seat frame part and the second leg part acting along the longitudinal direction of the rod for final connection of the second leg part to the seat frame part and transforming the self-standing intermediate assembly state into a self-standing ready-to-use state. This provides for a stable frame which is easy to mount and has a low weight. According to one embodiment the mounting plate is arranged inside a hollow tube of the seat frame part, and the opening being arranged on the second leg part. This provides for a strong connection which is also easy to tighten.

According to one embodiment the seat frame structure is at least partly made from hollow tubes made from a material selected among: metal, such as steel and aluminium, plastic, and composites. The composites could be fibre reinforced polymers, for example glass fibre and carbon reinforced plastics, and wooden particle reinforced plastics. These materials provide for high strength and low weight for the seat frame structure. Preferably, the hollow tubes are made from steel or aluminium. This provides for high strength and low cost.

According to one embodiment the seat frame part comprises a front seat frame bar, a rear seat frame bar, a first seat frame side bar and a second seat frame side bar that are all made from hollow tubes. An advantage of this embodiment is that it provides for a particularly compact and light weight upholstered seating furniture frame. According to one embodiment, a front seat frame bar, a rear seat frame bar, first seat frame side bar and second seat frame side bar are all made from metal tubes, more preferably steel tubes. This provides for a particularly strong design with low space requirement.

According to one embodiment, a front seat frame bar, a rear seat frame bar, a first seat frame side bar and a second seat frame side bar are all made from hollow tubes having a rectangular cross-section. This provides for an efficient manner of mounting, e.g., legs, pieces of upholstery, covers, etc. to the seat frame. According to one embodiment the rectangular cross-section has its largest width in the vertical direction. This provides for an efficient way of obtaining strength to withstand large loads from people sitting in the upholstered sitting piece of furniture.

According to one embodiment first and second gable portions are connectable on opposite ends of the seat frame part, wherein a back rest of the upholstered seating furniture frame is adapted to be connected to the first and second gable portions. An advantage of this embodiment is that it provides for a strong seating furniture frame which has a low weight.

According to one embodiment at least one, preferably both, of first and second gable portions is/are provided with a respective back rest connector, and wherein the corresponding end/-s of the back rest is/are provided with gable connector/-s, each of which gable connector/-s is adapted for wedging connection to the respective back rest connector of the gable portion. An advantage of this embodiment is that it provides for simple mounting of the back rest. According to one embodiment the gable connector/-s has the general shape of a wedge. Thereby, an efficient and stable wedging connection may be obtained.

According to one embodiment the seat frame part, first and second leg parts and a back rest of the upholstered seating furniture frame are adapted for being packed in a parallelepiped shaped flat package. An advantage of this embodiment is that the piece of furniture is easy to store and to transport from a store to the home of a person. Preferably the parallelepiped shaped flat package has a height which is less than 30% of a width of the parallelepiped shaped flat package. An advantage of this embodiment is that it makes it easy to stack several flat packages on top of each other.

According to one embodiment the supporting device comprises a supporting hook adapted to co-operate with a mating portion arranged on the other of the seat frame part and the first leg part. An advantage of this embodiment is that the connection in the self-standing intermediate assembly state will be more stable.

According to one embodiment the first leg part comprises a front and a rear post made from metal tubes. This provides for a strong arrangement of the legs. Preferably, the metal is steel, as this provides for large strength at a low weight.

According to one embodiment the first leg part forms part of a first gable. An advantage of this embodiment is that it provides for reducing the number of pieces required to assemble the upholstered seating furniture frame.

A further object of the present invention is to provide an upholstered seating piece of furniture which is easy to mount and has a low weight. This object is achieved by means of an upholstered seating piece of furniture that comprises an upholstered seating furniture frame of any of the embodiments described hereinabove.

An advantage of this upholstered seating piece of furniture is that it can easily be mounted by a single person, and has a low weight.

According to one embodiment the upholstered seating piece of furniture further comprises at least one back-rest upholstery piece supported by a back-rest of the upholstered seating furniture frame, at least one seating upholstery piece at least partly covering the seat frame part, and a cover covering the back-rest upholstery piece and supported by the upholstered seating furniture frame. An advantage of this embodiment is that a low weight, easy-to-assemble, and still comfortable upholstered seating piece of furniture is provided.

A further object of the present invention is to provide an efficient and easy method of mounting an upholstered seating furniture frame.

This object is achieved by means of providing a seat frame part that comprises a seat frame structure which is at least partly made from hollow tubes, providing at least a first leg part, inserting an insertion portion of a supporting device arranged on one of the seat frame part and the first leg part into the other of the seat frame part and the first leg part to align and hold the first leg part mounted to the seat frame part in a self-standing intermediate assembly state, and mounting a final connecting device by tightening a final connection mounting rod co-operating with a bore arranged in a mounting plate arranged on one of the seat frame part and the first leg part, the bore being parallel with a sitting plane of the seat frame part, and with an opening arranged in the other of the seat frame part and the first leg part, to transform the self-standing intermediate assembly state into a self-standing ready-to-use state.

An advantage of this method is that it provides for efficient and simple mounting of an upholstered seating furniture frame, a method which can be performed by a single person.

According to one embodiment a second leg part is mounted to an opposite end of the seat frame according to a principle similar to that of mounting the first leg part.

According to one embodiment the method further comprises mounting first and second gable portions to the seat frame part, each gable portion being provided with a back rest connector, providing a back-rest having gable connectors arranged on opposite ends of the back-rest, each gable connector being adapted for wedging connection to the back-rest connectors, and moving the back rest in a direction substantially perpendicular to the plane of the seat frame part to make the gable connectors of the back-rest connect to the back-rest connectors of the respective gable portions. An advantage of this method is that it provides for efficient and simple mounting of the back rest, by a single person.

Further objects and features of the present invention will be apparent from the description and the claims.

### Brief description of the Drawings

The invention will now be described in more detail with reference to the appended drawings in which:
Fig. 1 is a three-dimensional view illustrating a flat package containing an upholstered seating furniture frame.
Fig. 2 is a three-dimensional view illustrating the components of an upholstered seating furniture frame, as contained in the flat package of Fig. 1.
Fig. 3 is a three-dimensional view of a seat frame of the upholstered seating furniture frame.
Fig. 4a is a three-dimensional view illustrating a corner of the seat frame of Fig. 3.
Fig. 4b is a cross-sectional view illustrating a connector of the corner illustrated in Fig. 4a.
Fig. 5 is a three-dimensional view illustrating a first gable of the upholstered seating furniture frame.
Fig. 6a is a three-dimensional view illustrating a back rest connector of the first gable.
Fig. 6b is a three-dimensional view illustrating the back rest connector in more detail.
Fig. 7a is a three-dimensional view illustrating a first seat frame connector of the first gable.
Fig. 7b is a three-dimensional view illustrating the first seat frame connector in more detail and in cross-section.
Fig. 8 is a three-dimensional view illustrating a back rest of the upholstered seating furniture frame.
Fig. 9a is a three-dimensional view illustrating a first gable connector of the back rest.
Fig. 9b is a three-dimensional view illustrating a first seat frame connector pin of the back rest.
Fig. 10 illustrates a first step of mounting an upholstered seating furniture frame.
Fig. 11a illustrates how a seat frame is temporarily connected to a first gable.
Fig. 11b illustrates how the seat frame has been firmly connected to the first gable.
Fig. 11c illustrates an alternative embodiment of temporarily connecting a seat frame to a first gable.
Fig. 12 illustrates a second step of mounting an upholstered seating furniture frame.
Fig. 13 illustrates a third step of mounting an upholstered seating furniture frame.
Fig. 14 illustrates how a backrest has been connected to the first gable.
Fig. 15 illustrates a further step of mounting an upholstered seating piece of furniture.
Fig. 16 illustrates a final step of mounting an upholstered seating piece of furniture.
Fig. 17a is a cross-sectional view and illustrates an alternative connection between seat frame and first gable.
Fig. 17b is a three-dimensional view further illustrating the alternative connection between seat frame and first gable.

### Description of preferred Embodiments

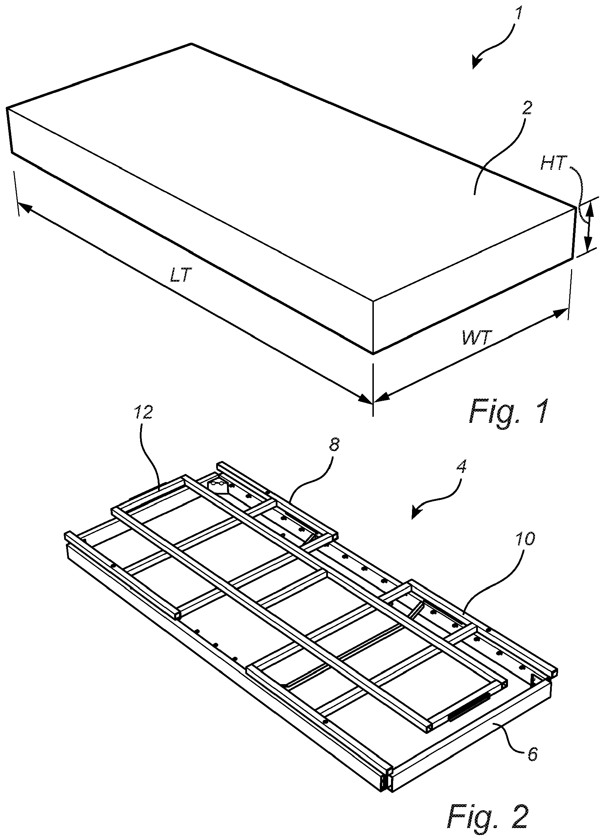

Fig. 1 illustrates a flat package 1 having the general shape of a parallelepiped, in this embodiment a rectangular cuboid, and containing an upholstered seating furniture frame packed in, e.g., a cardboard package 2. In this embodiment the upholstered seating furniture frame is intended for an upholstered sofa. For an upholstered sofa having, in its mounted state, a length of 2 meters, a height of 1.2 meters, and a depth of 0.8 meters, the flat package 1 could have the outer dimensions: length LT of 2.1 meters, width WT of 0.9 meters, and height HT of 0.2 meters, meaning a very efficient and small space requirement both when the flat package 1 is kept in the store and also when being transported from the store to the end-users home. Hence, preferably, the parallelepiped shaped flat package 1 has a length LT which is 5-20% longer than the length of the upholstered sofa frame. The height HT of the parallelepiped shaped flat package 1 is preferably less than 30% of the width WT of the parallelepiped shaped flat package 1.

Fig. 2 illustrates components that are contained in the flat package 1 of Fig. 1 and are intended for forming an upholstered seating furniture frame 4. The components include a seat frame 6, a first leg part in the form of a first gable 8, a second leg part in the form of a second gable 10, and a back rest 12. As can be seen these various components can be packed together with a very small space requirement.

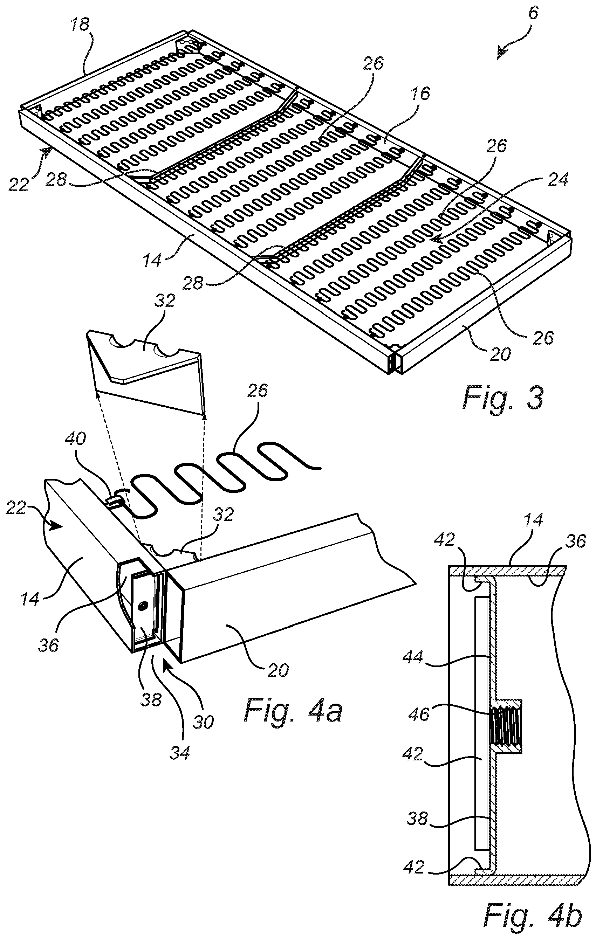

Fig. 3 illustrates the seat frame 6 in more detail. The seat frame 6 includes a seat frame structure which comprises a front seat frame bar 14 which is arranged in parallel with and at a distance from a rear seat frame bar 16. The front and rear seat frame bars 14, 16 are connected to each other at opposite ends via a first seat frame side bar 18 and a second seat frame side bar 20. The front and rear bars 14, 16 and the first and second side bars 18, 20 together form a rectangular seat frame structure 22. Preferably, the seat frame bars 14, 16 and the first and second side bars 18, 20 are all made from hollow tubes, for example hollow tubes made from metal, such as steel or aluminium, plastic materials, or hollow tubes made from composite material, meaning a material made from at least two components. The composite material could, for example, be fibre reinforced polymers, for example carbon and/or glass fibre reinforced plastic, wooden particle reinforced plastic, etc. The bars 14, 16, 18, 20 are, preferably, all made from hollow tubes having a rectangular cross-section which provides for an efficient manner of mounting, e.g., legs, pieces of upholstery, covers, etc. to the seat frame 6. The rectangular cross-section of the hollow tubes has its largest width in the vertical direction to withstand large sitting loads

The seat frame 6 comprises a seat support structure 24. In the illustrated embodiment the seat support structure 24 comprises a plurality of parallel zig-zag springs 26 that are connected to and extends between the front and rear seat frame bars 14, 16. Optionally, one or more further seat support bars 28 may extend between the front and rear seat frame bars 14, 16 to increase the stability of the seat frame structure 22.

Fig. 4a illustrates a seat frame corner 30 of the seat frame structure 22 in more detail. It will be appreciated that the other seat frame corners 30 of the seat frame structure 22 may be designed in a similar manner. The seat frame corner 30 comprises a seat structure connecting bracket 32 that fixes the front seat frame bar 14 to the second side bar 20. At the junction between the front seat bar 14 and the side bar 20 there is a gable receiving opening 34 which is adapted to receive the first gable, as will be shown hereinafter.

The front seat frame bar 14 has a hollow interior 36 and in this hollow interior a gable mounting plate 38 is arranged, as will be described in more detail hereinafter. Similar mounting plates 38 are arranged in each of the four frame corners 30 of the seat frame structure 22.

As is also illustrated in Fig. 4a the front seat frame bar 14 is provided with a number of spring holders, of which one spring holder 40 is illustrated in Fig. 4a, to support the springs 26.

Fig. 4b is a cross-section of the front seat frame bar 14 in the area of the gable mounting plate 38. The gable mounting plate 38 is provided with fixing flanges 42 for fixing, e.g. by welding, the plate 38 to the interior 36 of the bar 14. The plate 38 has a central portion 44 which is provided with a threaded bore 46 for connection to the first gable 8, as will be described hereinafter. The threaded bore 46 is parallel to a sitting plane of the seat frame 6, the sitting plane being the horizontal plane at which people will be sitting on the sofa, and in this embodiment the bore 46 is also parallel with the longitudinal direction of the front seat frame bar 14, i.e. the centre line of the bore 46 is parallel to the sitting plane of the seat frame 6, and to the longitudinal direction of the front seat frame bar 14.

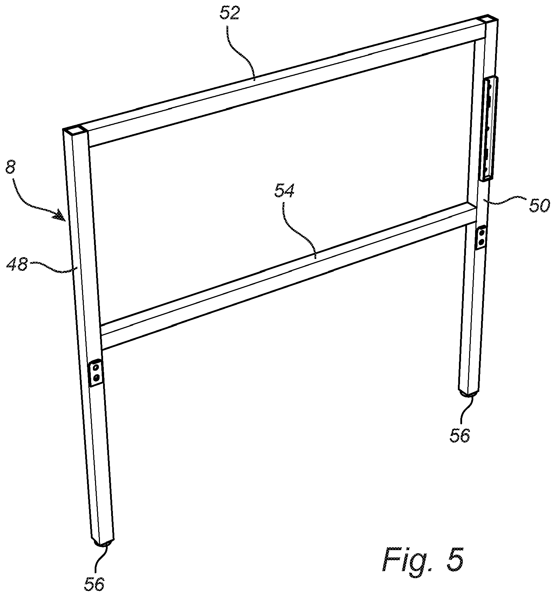

Fig. 5 illustrates the first gable 8 in more detail. The first gable 8 comprises a front post 48 and a rear post 50 that are parallel to each other and that will be essentially vertical in the final upholstered sofa. The front and rear posts 48, 50 form a first leg part of the upholstered seating furniture frame and are connected to each other by an upper armrest bar 52 and by a central gable support bar 54. At lower ends, opposite to the armrest bar 52, the front and rear posts 48, 50 are provided with a respective foot 56.

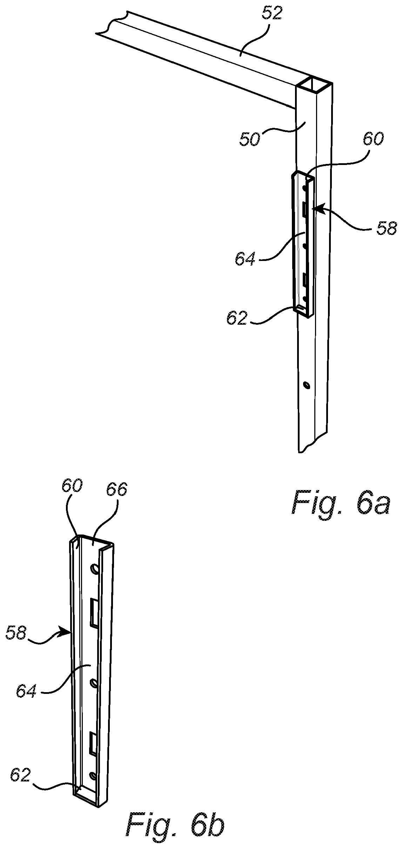

Figs. 6a and 6b illustrate a back rest connector 58 which is mounted on the rear post 50 of the first gable. The back rest connector 58 has an upper end 60 which is located adjacent the armrest bar 52, and an opposite lower end 62. A connecting track 64 extends from the upper end 60 to the lower end 62. The connecting track 64 is wider at the upper end 60 than at the lower end 62 and therefore has the general shape of a wedge receiver with its opening 66 arranged adjacent the arm rest bar 52. It will be appreciated that a similar back rest connector is mounted on the second gable 10. In the mounted state the back rest connectors of the two gables 8, 10 will face each other.

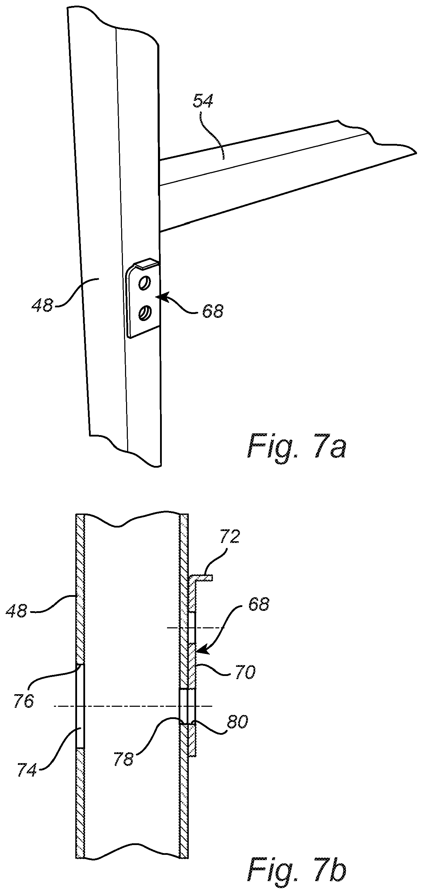

Figs. 7a and 7b illustrate a first seat frame connector 68 of the first gable 8. The first seat frame connector 68 is mounted to the front post 48 slightly below the central gable support bar 54. The connector 68 comprises a connector body 70 being mounted to the front bar 48, such as by welding or riveting, and being parallel with the front bar 48, and a supporting device having an insertion portion in the form of a supporting pin 72 which is, in this embodiment, permanently fixed to the connector 68 and thereby permanently fixed to the first gable 8, and which extends perpendicular out from the body 70 and away from the front post 48. Typically, the body 70 has been welded, riveted and/or, in alternative embodiments, bolted to the front bar 48.

A front post bore 74 extends through the front post 48. The bore 74 has a wide diameter opening 76 opposite to the connector 68 and a narrow diameter opening 78 adjacent to the connector 68. A connector bore 80 is arranged in the connector body 70 and has the same diameter as the narrow diameter opening 78 and is coaxial therewith.

A similar seat frame connector, i.e. a second seat frame connector, is mounted on the rear post of the first gable 8. Furthermore, similar first and second seat frame connectors are mounted on the second gable 10. In the mounted state the seat frame connectors of the two gables 8, 10 will face each other.

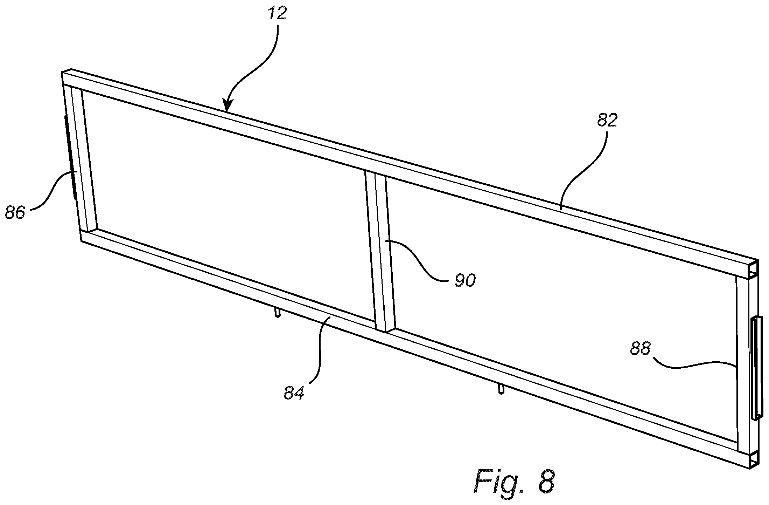

Fig. 8 illustrates the back rest 12 in more detail. The back rest 12 comprises an upper back rest bar 82 and a lower back rest bar 84 that are parallel to each other and that will be essentially horizontal in the final upholstered sofa. The upper back rest bar 82 and the lower back rest bar 84 are connected to each other by a first vertical back rest support bar 86 and a second vertical back rest support bar 88 that are arranged in opposite ends of the upper and lower back rest bars 82, 84. Optionally, the back rest 12 may comprise one or more further vertical back rest support bars 90 that connect the back rest bars 82 and 84.

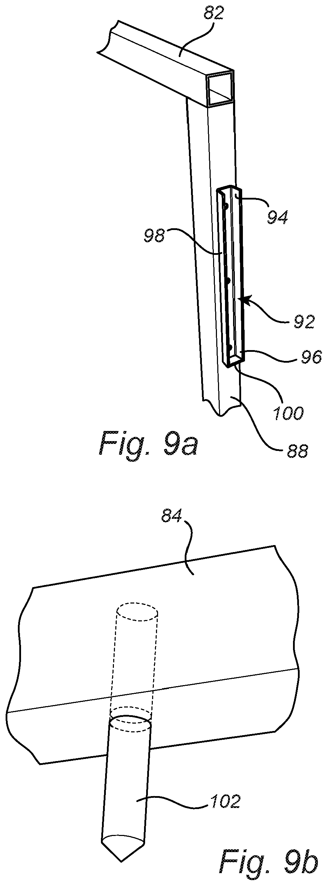

Fig. 9a illustrates a first gable connector 92 of the back rest 12. The first gable connector 92 is mounted, e.g. by welding, riveting or bolting, on the second vertical back rest support bar 88 of the back rest. The gable connector 92 has an upper end 94 which is located adjacent the upper back rest bar 82, and an opposite lower end 96. A connecting rail 98 extends from the upper end 94 to the lower end 96. The connecting rail 98 is wider at the upper end 94 than at the lower end 96 and therefore has the general shape of a wedge with its edge 100 arranged remotely with respect to the upper back rest bar 82. It will be appreciated that a similar gable connector is mounted on the first vertical back rest support bar 86. In the mounted state the gable connectors of the back rest 12 will face away from each other.

Fig. 9b illustrates a first seat frame connector pin 102 of the back rest 12. The first seat frame connector pin 102 is mounted to the underside of the lower back rest bar 84 and extends downwardly, as illustrated in Fig. 9b, therefrom.

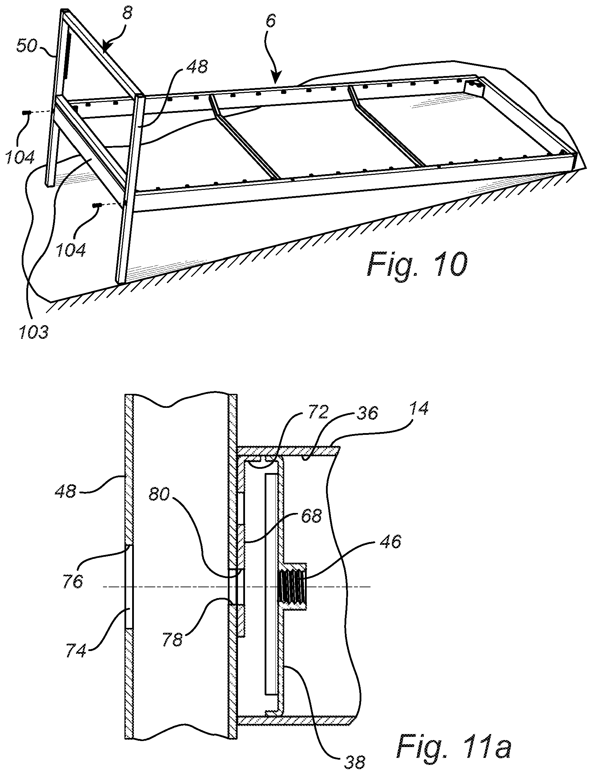

Fig. 10 illustrates a first step of mounting the upholstered seating furniture frame. In this first step the seat frame 6 is loosely connected to the first gable 8. This can be done by a single person, such person lifting one end 103 of the seat frame 6 with one hand and then using the other hand to move the first gable 8 such that the front post 48 and rear post 50 of the first gable 8 are received in the respective gable receiving opening 34, best shown in Fig. 4a, of the seat frame 6. Due to the respective seat frame connectors 68, described in detail with reference to Figs. 7a-b, the first gable 8 can temporarily rest in this position, being a self-standing intermediate assembly state, until final connection mounting rods, having in this embodiment the form of final connection mounting bolts 104, are mounted, as will be described in more detail:

Fig. 11a illustrates in more detail the temporary connection of the seat frame 6 to the first gable 8. The front post 48 of the first gable 8 is provided with the frame connector 68 and in the first stage of moving the front post 48 into the gable receiving opening 34, illustrated in Fig. 4a, the insertion portion, i.e. the supporting pin 72 will be inserted into the hollow interior 36 of the front seat frame bar 14, and the front seat frame bar 14 will come to rest on the supporting pin 72. In this position, the wide diameter opening 76 and the narrow diameter opening 78 of the front post bore 74 and the connector bore 80 of the connector 68 will become aligned with the threaded bore 46 of the gable mounting plate 38. Hence, the supporting device in the form of the supporting pin 72 is adapted to align and hold the first gable 8 mounted to the seat frame 6 in the self-standing intermediate assembly state.

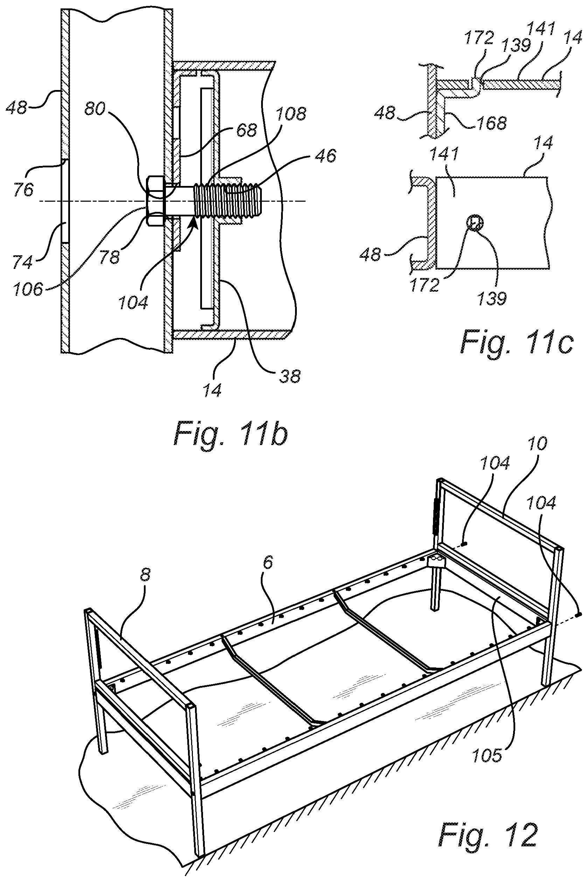

Fig. 11b illustrates in more detail the fixed connection between the seat frame 6 and the first gable 8. The final connection mounting bolt 104 has been inserted into the front bore hole 74. The head 106 of the bolt 104 has smaller outer dimensions than the wide diameter opening 76 but larger outer dimensions than the narrow diameter opening 78 and therefore the head 106 co-operates with the opening 78 by passing through the opening 76 and abutting the front post 48, at the interior thereof, adjacent to the opening 78. The threaded stem 108 of the final connection mounting bolt 104 passes through the openings 78 and 80 and engages the threaded bore 46, the latter extending in parallel with the sitting plane of the seat frame 6, of the plate 38. By tightening the bolt 104 the front post 48 of the first gable 8 can be firmly connected to the front seat frame bar 14 of the seat frame 6, as the tightening force will act along the longitudinal direction of the bolt 104 and will press the first gable 8 towards the seat frame 6. The longitudinal direction of the bolt 104 coincides, in this self-standing ready-to-use state, with the longitudinal direction of the front seat frame bar 14, which is a hollow tube, of the seat frame 6, to which frame bar 14 the bolt 104 is connected via the mounting plate 38 being arranged therein. An advantage is that a very strong connection of the seat frame 6 to the first gable 8 is obtained, since tightening force applied to the bolt 104 will be transferred along the longitudinal direction of the rod 104, to the seat frame 6 and the first gable 8, and also along the longitudinal direction of the frame bar 14. In a similar manner a further bolt 104 can be used for firmly connecting the rear post 50 of the first gable 8 to the rear seat frame bar 16, illustrated in Fig. 3, of the seat frame 6. Hence, the bores 76, 78, 80, the gable mounting plate 38 and the bolt 104 all form part of a final connecting device adapted for final mounting of the first gable 8 to the seat frame 6 to obtain the self-standing ready-to-use state of the connection between the seat frame 6 and the first gable 8.

Fig. 11c illustrates a slightly modified embodiment, as seen in cross-sectional side view and in top view. In this embodiment a frame connector 168, which is attached to the front post 48, is provided with a supporting device having an insertion portion in the form of a supporting hook 172. The supporting hook 172 is adapted for co-operating with a mating portion in the form of an opening 139 formed in an upper web 141 of the front seat frame bar 14. With the embodiment of Fig. 11c a self-standing intermediate assembly state being more stable than that of Fig. 11a may be obtained.

Fig. 12 illustrates a second step of mounting the upholstered seating furniture frame. In this second step the seat frame 6, being fixedly connected to the first gable 8, is loosely connected to the second gable 10. This can be done by a single person, such person lifting a second end 105 of the seat frame 6 with one hand and then using the other hand to move the second gable 10 to a temporary connection with the seat frame 6 according to the same principle as illustrated hereinbefore with reference to Fig. 11a for the first gable 8, thereby obtaining a self-standing intermediate assembly state. Then final connection mounting rods in the form of final connection mounting bolts 104 are mounted, according to principles similar to those described with reference to Fig. 11b, to connect the second gable 10 to the seat frame 6 and arrive at a self-standing ready-to-use state of the connection between the second gable 10 and the seat frame 6.

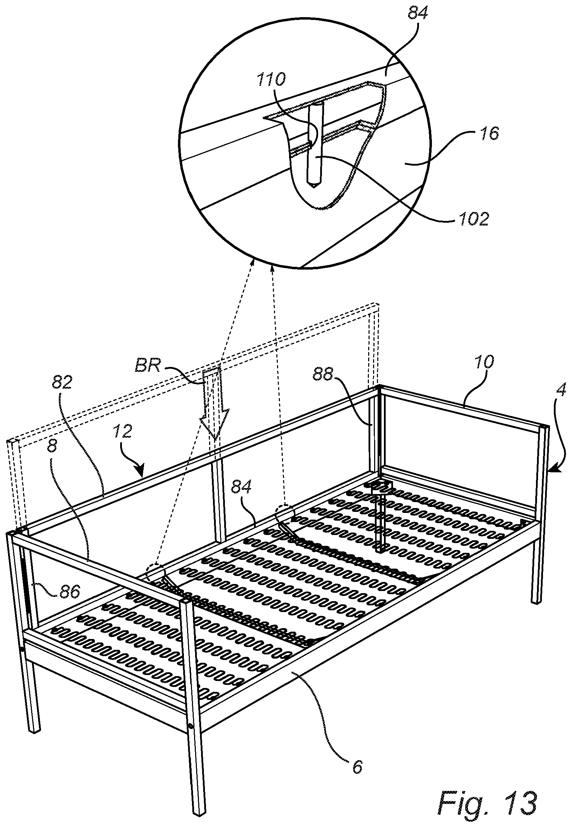

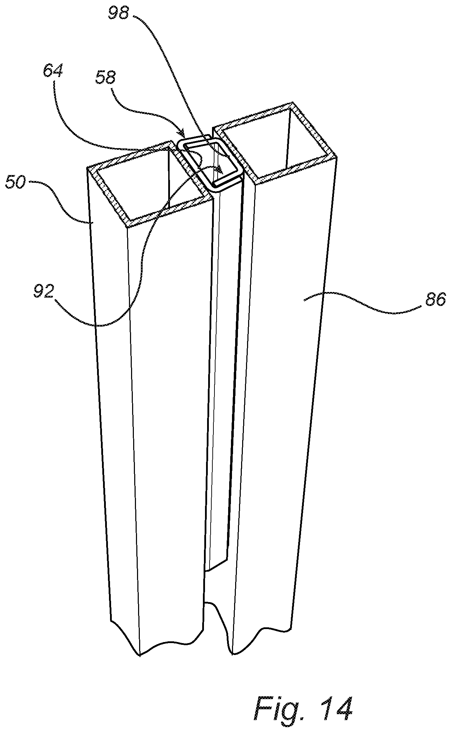

Fig. 13 illustrates a third step of mounting the upholstered seating furniture frame 4. In this third step a person mounting the upholstered seating furniture frame has moved the back rest 12 vertically downwards, in the direction of the arrow BR, into the space between the first and second gables 8, 10. Thereby, as will be illustrated in more detail hereinafter with reference to Fig. 14, the connecting rails 98 of the respective gable connectors 92 arranged at the first vertical back rest support bar 86 and the second vertical back rest support bar 88 of the back rest 12, as illustrated hereinbefore with reference to Fig. 9a, have slid into the respective connecting track 64 of the respective back rest connectors 58 arranged on the respective first and second gable 8, 10, as illustrated in Figs. 6a and 6b.

Furthermore, as illustrated with a slight enlargement in Fig. 13, seat frame connector pins 102 mounted to the underside of the lower back rest bar 84 have become inserted into a respective opening 110 in the rear seat frame bar 16. Thereby, the lower back rest bar 84 is prevented from being bent when a person sitting in the upholstered seating piece of furniture leans against the back rest 12.

Fig. 14 illustrates how, after the third step illustrated in Fig. 13, the connecting rail 98 of the gable connector 92 mounted on the first vertical back rest support bar 86 has slid into the connecting track 64 of the back rest connector 58 mounted on the rear post 50. Thereby, the back rest connector 58 embraces the gable connector 92 in a wedging connection, and the back rest 12 is, as illustrated in Fig. 13, firmly connected to the first and second gables 8, 10.

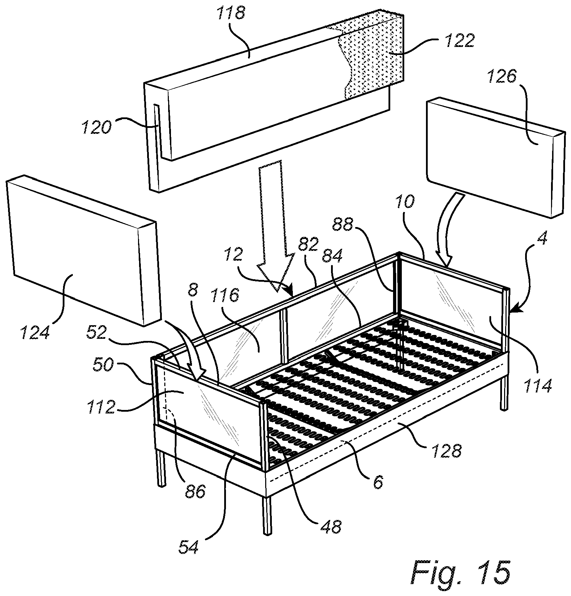

Fig. 15 illustrates a further step of mounting the upholstered seating piece of furniture comprising the upholstered seating furniture frame 4. In this step upholstery sections are mounted to the upholstered seating furniture frame 4. Optionally, first and second gable upholstery support sheets 112, 114 are first mounted to the first and second gables 8, 10 to cover the respective "window" that is formed between front post 48, rear post 50, upper armrest bar 52, and central gable support bar 54. The gable upholstery support sheets 112, 114 may, for example, be made from a sheet of woven or non-woven textile, a metal net, a plastic sheet, or another type of sheet. The upholstery sheets 112, 114 could be applied already in factory production, for example by gluing, hot melting, stapling, welding, riveting or sewing the sheet 112, 114 to the respective gable 8, 10, or could be applied to the respective gable 8, 10 by the end customer, using, e.g. Velcro straps. Similarly, the back rest 12 could be provided with a back rest upholstery support sheet 116 covering the "window" formed by upper back rest bar 82, lower back rest bar 84, first vertical back rest support bar 86 and second vertical back rest support bar 88. The back rest upholstery support sheet 116 could be of a similar type and fixing arrangement as the sheets 112, 114.

Furthermore, Fig. 15 illustrates how a back-rest upholstery piece 118 is moved down over the back rest 12. The back-rest upholstery piece 118 comprises a groove 120 extending along the length of the upholstery piece 118. The upholstery piece 118 could be moved downward towards the back rest 12, such that the back rest 12 is received in the groove 120 of the upholstery piece 118, and the upholstery piece 118 "rides" on the back rest 12. The upholstery piece 118 could, for example, be made from a block of polyurethane (PU) foam. It is also possible to make an upholstery piece from other materials, such as non-woven fibres, staple fibres, etc. Optionally, the upholstery piece 118 could be encapsulated in an upholstery cover 122. The upholstery piece 118 could, for example, be mounted to the back rest 12 by means of Velcro straps, buttons, or other suitable devices. Similarly, first and second gable upholstery pieces 124, 126 are arranged for being moved down and be fitted to the first and second gables 8, 10. These upholstery pieces 124, 126 could be mounted on the inside of the respective gable 8, 10, or could be provided with a groove, similar to the arrangement of the back-rest upholstery piece 118. Furthermore, the upholstery pieces 124, 126 could be made from similar materials, and could be mounted in accordance with similar principles, as the upholstery piece 118.

Optionally, a seat frame cover, for example a seat frame skirt 128, has been mounted to the seat frame 6 to cover the same. The seat frame skirt 128 would typically be made from a woven textile, which may be mounted to the seat frame 6 by means of buttons, Velcro straps, or similar.

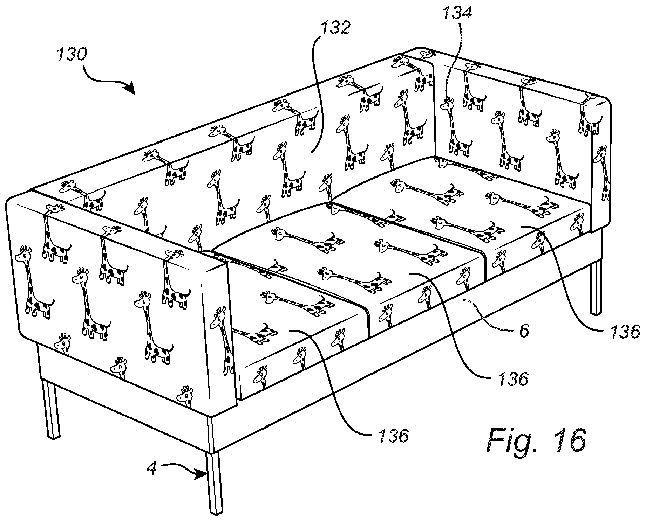

Fig. 16 illustrates a final step of mounting an upholstered seating piece of furniture, in this case an upholstered sofa, and illustrates the final upholstered sofa 130. In this step a tailor made sofa cover textile 132 has been applied over the upholstery pieces 118, 124, 126 to cover the same and to form an outer coating that has pleasant appearance visually, it may for example have a pattern 134, and is pleasant to sit on. Furthermore, seating upholstery pieces in the form of three lose seat cushions 136 have been put on top of the seat frame 6 of the upholstered seating furniture frame 4 to thereby form a comfortable place for sitting on the upholstered sofa 130.

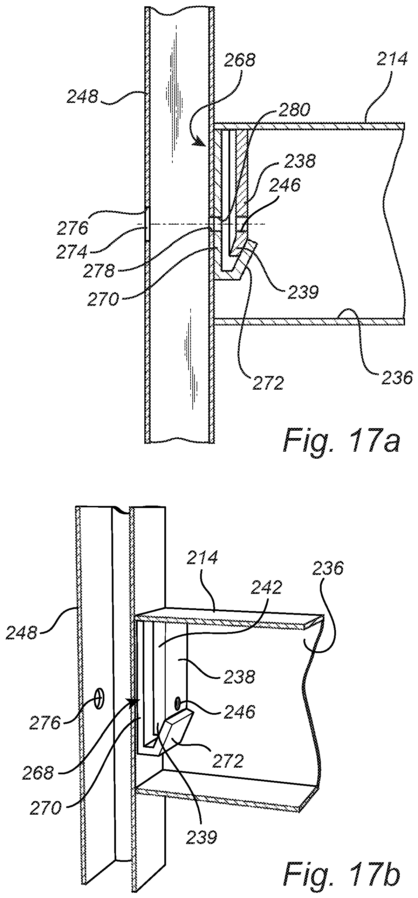

Figs. 17a and 17b illustrate a connection between a front post 248 and a front seat frame bar 214 illustrated in a self-standing intermediate assembly state corresponding to that illustrated in Fig. 11a but in an alternative embodiment. In this alternative embodiment a first seat frame connector 268 is mounted to the front post 248 and comprises a connector body 270 being mounted to, and being parallel with the front bar 248, and a supporting device having an insertion portion in the form of a supporting hook 272 which is, in this embodiment, permanently fixed to the connector 268 and which extends out from the body 270 and away from the front post 248. The supporting hook 272 is adapted for extending into the hollow front seat frame bar 214 as will be described hereinafter. A front post bore 274 extends through the front post 248. The bore 274 has a wide diameter opening 276 opposite to the connector 268 and a narrow diameter opening 278 adjacent to the connector 268. A connector bore 280 is arranged in the connector body 270 and has the same diameter as the narrow diameter opening 278 and is coaxial therewith.

The front seat frame bar 214 is provided with a gable mounting plate 238. The gable mounting plate 238 is provided with fixing flanges 242 for fixing, e.g. by welding, the plate 238 to the interior 236 of the bar 214. The plate 238 is provided with a threaded bore 246 being parallel to a sitting plane of the seat frame in which the frame bar 214 is included, and also parallel to the longitudinal direction of the front seat frame bar 214 itself, for final connection to the front post 248 by means of a bolt in accordance with principles similar to those described in Fig. 11b. At a lower end thereof the mounting plate 238 is provided with an inclined portion 239 which is adapted to fit in the supporting hook 272 of the connector 268 in a wedging arrangement. Compared to the embodiment illustrated in Figs. 4b, 7b and 11a, the arrangement with the supporting hook 272 of the connector 268 mating with the inclined portion 239 of the mounting plate 238 provides for an increased stability of the connection between a seat frame and a gable in the self-standing intermediate assembly state. Furthermore, an increased strength, compared to the embodiment illustrated in Fig. 11b, of the connection between seat frame and gable in a self-standing ready-to-use state can also be achieved.

It will be appreciated that numerous variants of the above described embodiments are possible within the scope of the appended claims.

Hereinbefore it has been described that the upholstered seating piece of furniture is an upholstered sofa. It will be appreciated that the upholstered seating piece of furniture could also be an upholstered armchair, an upholstered couch, or another type of upholstered seating piece of furniture.

Hereinbefore it has been described that each of the gables 8, 10 is adapted for an upholstered sofa with two armrests. It will be appreciated that the upholstered piece of furniture could also be provided with only one armrest, or with no armrest at all. In such a case the respective upper armrest bar 52 and the upper portion of the respective front post 48 could simply be omitted from the respective gable.

Hereinbefore it has been described that the front and rear posts 48, 50 that form respective leg parts are connected to each other by armrest bar 52 and central gable support bar 54. It will be appreciated that the front and rear posts 48, 50 may also be connected to each other in other ways, for example they could be connected by means of only the central gable support bar 54 or only by the armrest bar 52. Furthermore, the front and rear posts 48, 50 may also be independent from each other, in which case they would not be connected to each other at all.

Hereinbefore it has been described that the seat frame bars 14, 16 and the first and second side bars 18, 20 are made from hollow tubes of rectangular cross-section. According to alternative embodiments these tubes could have other cross-sections, including, for example, square and circular cross-section.

Hereinbefore it has been described that the final connection mounting rods have the form of final connection mounting bolts 104. It will be appreciated that final connection mounting rods could have other forms that are also suitable for connecting the seat frame 6 to first and second leg parts 8, 10. For example, the final connection mounting rod could have threads in both ends, and cooperate with a nut to tighten the rod to the opening 78 of the first leg part 8. According to a further alternative embodiment the final connection mounting rod could be premounted to the mounting plate 38.

To summarize, an upholstered seating furniture frame (4) comprises a seat frame part (6) and at least a first leg part (8) connectable to the seat frame part (6). The seat frame part (6) comprises a seat frame structure (14, 16, 18, 20) which is at least partly made from hollow tubes. At least one of the seat frame part (6) and the first leg part (8) comprises a supporting device (72). The supporting device (72) is adapted to align and hold the first leg part (8) mounted to the seat frame part (6) in a self-standing intermediate assembly state. At least one of the seat frame part (6) and the first leg part (8) comprises at least portions of a final connecting device (76, 78, 80, 38, 104) adapted for final connection of the first leg part (8) to the seat frame part (6) for transforming the self-standing intermediate assembly state into a self-standing ready-to-use state.

## Claims

1. An upholstered seating furniture frame comprising a seat frame part (6) and at least a first leg part (8) connectable to the seat frame part (6),
wherein the seat frame part (6) comprises a seat frame structure (14, 16, 18, 20) which is at least partly made from hollow tubes, wherein at least one of the seat frame part (6) and the first leg part (8) comprises a supporting device (72; 172; 272) adapted for alignment and temporary connection of the at least one of the seat frame part (6) and the first leg part (8) to the other of the seat frame part (6) and the first leg part (8), the supporting device (72; 172; 272) comprising an insertion portion (72; 172; 272) arranged on one of the seat frame part (6) and the first leg part (8) and adapted for insertion into the other of the seat frame part (6) and the first leg part (8) to align and hold the first leg part (8) mounted to the seat frame part (6) in a self-standing intermediate assembly state, wherein at least one of the seat frame part (6) and the first leg part (8) comprises at least portions of a final connecting device (76, 78, 80, 38, 104; 238) comprising: i) a mounting plate (38) comprising a bore (46) being parallel with a sitting plane of the seat frame part (6), the mounting plate (38) being arranged in one of the seat frame part (6) and the first leg part (8), ii) an opening (78) arranged in the other of the seat frame part (6) and the first leg part (8), and iii) a final connection mounting rod (104) arranged to co-operate with the opening (78) and with the bore (46) arranged in the mounting plate (38), the rod (104) being arranged for tightening to cause a tightening force on the seat frame part (6) and the first leg part (8) acting along the longitudinal direction of the rod (104) for final connection of the first leg part (8) to the seat frame part (6) and transforming the self-standing intermediate assembly state into a self-standing ready-to-use state.

2. An upholstered seating furniture frame according to claim 1, wherein the supporting device (72; 172; 272) is at least partly separate from the final connecting device (76, 78, 80, 38, 104; 238).

3. An upholstered seating furniture frame according to any one of the preceding claims, wherein the supporting device (72; 172; 272) and the final connecting device (76, 78, 80, 38, 104; 238) co-operate in the final connection of the first leg part (8) to the seat frame (6).

4. An upholstered seating furniture frame according to any one of the preceding claims, wherein the insertion portion (72; 172; 272) is permanently fixed to that one of the seat frame part (6) and the first leg part (8) on which the insertion portion (72; 172; 272) is arranged.

5. An upholstered seating furniture frame according to any one of the preceding claims, wherein the mounting plate (38) is arranged in the hollow interior (36) of a hollow tube (14) of the seat frame part (6), and wherein the opening (78) is arranged on the first leg part (8), preferably the longitudinal direction of the rod (104) coincides, in the self-standing ready-to-use state, with the longitudinal direction of the hollow tube (14) of the seat frame part (6), to which hollow tube (14) the rod (104) is connected via the mounting plate (38).

6. An upholstered seating furniture frame according to any one of the preceding claims, wherein the bore (46) of the mounting plate (38) is a threaded bore (46) adapted to cooperate with a threaded stem (108) of the rod (104), preferably the final connection mounting rod (104) being a bolt (104) wherein the opening (78) is smaller than a head (106) of the bolt (104) and is adapted to co-operate with the head (106) during tightening of the bolt (104).

7. An upholstered seating furniture frame according to any one of the preceding claims, comprising a second leg part (10) adapted to be connected to the seat frame part (6) at an opposite end (105) thereof, compared to the first leg part (8), wherein at least one of the seat frame part (6) and the second leg part (10) comprises a supporting device (72; 172; 272) adapted for alignment and temporary connection of the at least one of the seat frame part (6) and the second leg part (10) to the other of the seat frame part (6) and the second leg part (10), the supporting device (72; 172; 272) comprising an insertion portion (72; 172; 272) arranged on one of the seat frame part (6) and the second leg part (10) and adapted for insertion into the other of the seat frame part (6) and the second leg part (10) to align and hold the second leg part (10) mounted to the seat frame part (6) in a self-standing intermediate assembly state, and that at least one of the seat frame part (6) and the second leg part (10) comprises a final connecting device (76, 78, 80, 38, 104; 238) comprising: i) a mounting plate (38) comprising a bore (46) being parallel with a sitting plane of the seat frame part (6), the mounting plate (38) being arranged in one of the seat frame part (6) and the second leg part (10), ii) an opening (78) arranged in the other of the seat frame part (6) and the second leg part (10), and iii) a final connection mounting rod (104) arranged to co-operate with the opening (78) and with the bore (46) arranged in the mounting plate (38), the rod (104) being arranged for tightening to cause a tightening force on the seat frame part (6) and the second leg part (10) acting along the longitudinal direction of the rod (104) for final connection of the second leg part (10) to the seat frame part (6) and transforming the self-standing intermediate assembly state into a self-standing ready-to-use state.

8. An upholstered seating furniture frame according to any one of the preceding claims, wherein the seat frame structure (14, 16, 18, 20) is at least partly made from hollow tubes made from a material selected among: steel, aluminium, plastic, and composites, such as fibre reinforced polymers, for example glass fibre and carbon reinforced plastics, preferably the hollow tubes having a rectangular cross-section, more preferably the rectangular cross-section having its largest width in the vertical direction.

9. An upholstered seating furniture frame according to any one of the preceding claims, wherein the seat frame part (6) comprises a front seat frame bar (14), a rear seat frame bar (16), a first seat frame side bar (18) and a second seat frame side bar (20) that are all made from metal tubes, more preferably steel tubes.

10. An upholstered seating furniture frame according to any one of the preceding claims, wherein first and second gable portions (8, 10) are connectable on opposite ends (103, 105) of the seat frame part (6), wherein a back rest (12) of the upholstered seating furniture frame (4) is adapted to be connected to the first and second gable portions (8, 10).

11. An upholstered seating furniture frame according to claim 10, wherein at least one, preferably both, of the first and second gable portions (8, 10) is/are provided with a respective back rest connector (58), and wherein the corresponding end/-s of the back rest (12) is/are provided with gable connector/-s (92), each of which gable connector/-s (92) is adapted for wedging connection to the respective back rest connector (58) of the gable portion (8, 10), preferably the gable connector/-s (92) has the general shape of a wedge.

12. An upholstered seating furniture frame according to any one of the preceding claims, wherein the seat frame part (6), first and second leg parts (8, 10) and a back rest (12) of the upholstered seating furniture frame (4) are adapted for being packed in a parallelepiped shaped flat package (2), preferably the parallelepiped shaped flat package (2) has a height (HT) which is less than 30% of a width (WT) of the parallelepiped shaped flat package (2).

13. An upholstered seating furniture frame according to any one of the preceding claims, wherein the first leg part (8) comprises a front and a rear post (48, 50) made from metal tubes, more preferably made from steel tubes.

14. An upholstered seating furniture frame according to any one of the preceding claims, wherein the supporting device comprises a supporting hook (172; 272) adapted to co-operate with a mating portion (139; 239) arranged on the other of the seat frame part (6) and the first leg part (8).

15. An upholstered seating furniture frame according to any one of the preceding claims, wherein the first leg part forms part of a first gable (8).

16. An upholstered seating piece of furniture, **characterised in that** the upholstered seating piece of furniture (130) comprises an upholstered seating furniture frame (4) according to any one of the preceding claims.

17. An upholstered seating piece of furniture according to claim 16, wherein the upholstered seating piece of furniture (130) further comprises at least one back-rest upholstery piece (118) supported by a back-rest (12) of the upholstered seating furniture frame (4), at least one seating upholstery piece (136) at least partly covering the seat frame part (6), and a cover (132) covering the back-rest upholstery piece (118) and supported by the upholstered seating furniture frame (4).

18. A method of mounting an upholstered seating furniture frame, comprising providing a seat frame part (6) that comprises a seat frame structure (14, 16, 18, 20) which is at least partly made from hollow tubes, providing at least a first leg part (8), inserting an insertion portion (72; 172; 272) of a supporting device (72; 172; 272) arranged on one of the seat frame part (6) and the first leg part (8) into the other of the seat frame part (6) and the first leg part (8) to align and hold the first leg part (8) mounted to the seat frame part (6) in a self-standing intermediate assembly state, and mounting a final connecting device (76, 78, 80, 38, 104; 238) by tightening a final connection mounting rod (104) co-operating with a bore (46) arranged in a mounting plate (38) arranged on one of the seat frame part (6) and the first leg part (8), the bore (46) being parallel with a sitting plane of the seat frame part (6), and with an opening (78) arranged in the other of the seat frame part (6) and the first leg part (8), to transform the self-standing intermediate assembly state into a self-standing ready-to-use state.

19. A method according to claim 18, further comprising, subsequent to the step of mounting a final connecting device (76, 78, 80, 38, 104; 238) to transform the self-standing intermediate assembly state into a self-standing ready-to-use state, a step of mounting a second leg part (10) at an opposite end (105) of the seat frame part (6) by inserting an insertion portion (72; 172; 272) of a supporting device (72; 172; 272) arranged on one of the seat frame part (6) and the second leg part (10) into the other of the seat frame part (6) and the second leg part (10) to align and hold the second leg part (10) mounted to the seat frame (6) in a self-standing intermediate assembly state, and mounting a final connecting device (76, 78, 80, 38, 104; 238) by tightening a final connection mounting rod (104) co-operating with a bore (46) arranged in a mounting plate (38) arranged on one of the seat frame part (6) and the second leg part (10), the bore (46) being parallel with a sitting plane of the seat frame part (6), and with an opening (78) arranged in the other of the seat frame part (6) and the second leg part (10), to transform the self-standing intermediate assembly state into a self-standing ready-to-use state.

20. A method according to any one of claims 18-19, further comprising mounting first and second gable portions (8, 10) to the seat frame part (6), each gable portion (8, 10) being provided with a back rest connector (58), providing a back-rest (12) having gable connectors (92) arranged on opposite ends of the back-rest (12), each gable connector (92) being adapted for wedging connection to the back-rest connectors (58), and moving the back rest (12) in a direction substantially perpendicular to the plane of the seat frame part (6) to make the gable connectors (92) of the back-rest (12) connect to the back-rest connectors (58) of the respective gable portions (8, 10).

## Patentansprüche

1. Rahmen für ein gepolstertes Sitzmöbel, umfassend ein Sitzrahmenteil (6) und mindestens ein mit dem Sitzrahmenteil (6) verbindbares erstes Beinteil (8), wobei das Sitzrahmenteil (6) eine Sitzrahmenstruktur (14, 16, 18, 20) umfasst, die zumindest teilweise aus Hohlrohren hergestellt ist,
wobei das Sitzrahmenteil (6) und/ oder das erste Beinteil (8) eine Stützeinrichtung (72; 172; 272) aufweist, die zur Ausrichtung und vorübergehenden Verbindung des Sitzrahmenteils (6) und/oder des ersten Beinteils (8) mit dem jeweils anderen des Sitzrahmenteils (6) oder des ersten Beinteils (8) geeignet ist, wobei die Stützeinrichtung (72; 172; 272) einen Einführabschnitt (72; 172; 272) umfasst, der entweder an dem Sitzrahmenteil (6) oder dem ersten Beinteil (8) angeordnet und zum Einfügen in das jeweils andere des Sitzrahmenteils (6) oder des ersten Beinteils (8) ausgelegt ist, um das erste Beinteil (8), das an dem Sitzrahmenteil montiert ist, auszurichten und in einem selbststehenden Zwischenmontagezustand zu halten,
wobei das Sitzrahmenteil (6) und/oder das Beinteil (8) mindestens Abschnitte einer Fertigstellungs-Verbindungseinrichtung (76, 78, 80, 38, 104; 238) umfasst, die Folgendes umfasst:
i) eine Montageplatte (38), eine Bohrung (46) umfassend, die parallel zu einer Sitzebene des Sitzrahmenteils (6) ist, wobei die Montageplatte (38) entweder in dem Sitzrahmenteil (6) oder dem ersten Beinteil (8) angeordnet ist,
ii) eine Öffnung (78), die in dem anderen Teil des Sitzrahmenteils (6) und des ersten Beinteils (8) angeordnet ist, und
iii) eine Fertigstellungs-Verbindungsmontagestange (104), die angeordnet ist, um mit der Öffnung (78) und mit der in der Montageplatte (38) angeordneten Bohrung (46) zusammenzuwirken, wobei die Stange (104) zum Festziehen angeordnet ist, um eine Spannkraft auf das Sitzrahmenteil (6) und das erste Beinteil (8) zu bewirken, die entlang der Längsrichtung der Stange (104) zur endgültigen Verbindung des ersten Beinteils (8) mit dem Sitzrahmenteil (6) wirkt und den selbststehenden Zwischenmontagezustand in einen selbststehenden, gebrauchsfertigen Zustand überführt.

2. Rahmen für ein gepolstertes Sitzmöbel nach Anspruch 1, wobei die Stützeinrichtung (72; 172; 272) zumindest teilweise von der Fertigstellungs-Verbindungseinrichtung (76, 78, 80, 38, 104; 238) getrennt ist.

3. Rahmen für ein gepolstertes Sitzmöbel nach einem der vorhergehenden Ansprüche, wobei die Stützeinrichtung (72; 172; 272) und die Fertigstellungs-Verbindungseinrichtung (76, 78, 80, 38, 104; 238) bei der endgültigen Verbindung des ersten Beinteils (8) mit dem Sitzrahmen (6) zusammenwirken.

4. Rahmen für ein gepolstertes Sitzmöbel nach einem der vorhergehenden Ansprüche, wobei der Einführabschnitt (72; 172; 272) dauerhaft an demjenigen des Sitzrahmenteils (6) oder des ersten Beinteils (8) befestigt ist, an dem der Einführabschnitt (72; 172; 272) angeordnet ist.

5. Rahmen für ein gepolstertes Sitzmöbel nach einem der vorhergehenden Ansprüche, wobei die Befestigungsplatte (38) im hohlen Innenraum (36) eines Hohlrohres (14) des Sitzrahmenteils (6) angeordnet ist, und wobei die Öffnung (78) an dem ersten Beinteil (8) angeordnet ist, wobei vorzugsweise die Längsrichtung der Stange (104) im selbststehenden, gebrauchsfertigen Zustand mit der Längsrichtung des Hohlrohres (14) des Sitzrahmenteils (6) zusammenfällt, mit dessen Hohlrohr (14) die Stange (104) über die Montageplatte (38) verbunden ist.

6. Rahmen für ein gepolstertes Sitzmöbel nach einem der vorhergehenden Ansprüche, wobei die Bohrung (46) der Montageplatte (38) eine Gewindebohrung (46) ist, die mit einem Gewindeschaft (108) der Stange (104) zusammenwirken kann, wobei vorzugsweise die endgültige Fertigstellungs-Verbindungsmontagestange (104) eine Schraube (104) ist, deren Öffnung (78) kleiner als ein Kopf (106) der Schraube (104) ist und geeignet ist, mit dem Kopf (106) während des Anziehens der Schraube (104) zusammenzuwirken.

7. Rahmen für ein gepolstertes Sitzmöbel nach einem der vorhergehenden Ansprüche, umfassend ein zweites Beinteil (10), das dazu geeignet ist, mit dem Sitzrahmenteil (6) an einem, verglichen mit dem ersten Beinteil (8), entgegengesetzten Ende (105) desselben verbunden zu werden, wobei mindestens entweder das Sitzrahmenteil (6) oder das zweite Beinteil (10) eine Stützeinrichtung (72; 172; 272) umfasst, die zur Ausrichtung und vorübergehenden Verbindung des Sitzrahmenteils (6) und/oder des zweiten Beinteils (10) mit dem jeweils anderen Teil des Sitzrahmenteils (6) oder des zweiten Beinteils (10) geeignet ist, wobei die Stützeinrichtung (72; 172; 272) einen Einführabschnitt (72; 172; 272) aufweist, der an dem Sitzrahmenteil (6) und/oder dem zweiten Beinteil (10) angeordnet und zum Einführen in den jeweils anderen Teil von dem Stützrahmenteil (6) und dem zweiten Beinteil (10) ausgelegt ist, um das zweite Beinteil (10), das an dem Sitzrahmenteil (6) montiert ist, in einem selbststehenden Zwischenmontagezustand auszurichten und zu halten, und wobei das Sitzrahmenteil und/ oder das zweite Beinteil eine Fertigstellungs-Verbindungseinrichtung (76, 78, 80, 38, 104; 238) umfasst, die Folgendes umfasst:
i) eine Montageplatte (38) mit einer Bohrung (46) die parallel zu einer Sitzebene des Sitzrahmenteils (6) verläuft, wobei die Montageplatte (38) entweder in dem Sitzrahmenteil (6) oder dem zweiten Beinteil (10) angeordnet ist,
ii) eine Öffnung (78), die in dem anderen des Sitzrahmenteils (6) und des zweiten Beinteils (10) angeordnet ist, und
iii) eine Fertigstellungs-Verbindungsmontagestange (104), die angeordnet ist, um mit der Öffnung (78) und mit der in der Montageplatte (38) angeordneten Bohrung (46) zusammenzuwirken, wobei die Stange (104) zum Festziehen angeordnet ist, um eine Spannkraft auf das Sitzrahmenteil (6) und das zweite Beinteil (10) zu bewirken, die entlang der Längsrichtung der Stange (104) zur endgültigen Verbindung des zweiten Beinteils (10) mit dem Sitzrahmenteil (6) wirkt und den selbststehenden Zwischenmontagezustand in einen selbststehenden, gebrauchsfertigen Zustand überführt.

8. Rahmen für ein gepolstertes Sitzmöbel nach einem der vorhergehenden Ansprüche, wobei die Sitzrahmenstruktur (14, 16, 18, 20) zumindest teilweise aus Hohlrohren aus einem Material hergestellt ist, das ausgewählt ist aus: Stahl, Aluminium, Kunststoff und Verbundwerkstoffen, wie faserverstärkten Polymeren, bzw. glasfaser- und kohlenstoffverstärkten Kunststoffen, vorzugsweise weisen die Hohlrohre einen rechteckigen Querschnitt auf, weiter bevorzugt hat der rechteckige Querschnitt in vertikaler Richtung seine größte Ausdehnung.

9. Rahmen für ein gepolstertes Sitzmöbel nach einem der vorhergehenden Ansprüche, wobei der Sitzrahmenteil (6) eine vordere Sitzrahmenstange (14), eine hintere Sitzrahmenstange (16), eine erste Sitzrahmenseitenstange (18) und eine zweite Sitzrahmenseitenstange (20) umfasst, die alle aus Metallrohren, vorzugsweise aus Stahlrohren, hergestellt sind.

10. Rahmen für ein gepolstertes Sitzmöbel nach einem der vorhergehenden Ansprüche, wobei erste und zweite Giebelteile (8, 10) an gegenüberliegenden Enden des Sitzrahmenteils (6) verbindbar sind, wobei eine Rückenlehne (12) des Polstersitzmöbelrahmens (4) mit den ersten und zweiten Giebelteilen (8, 10) verbindbar ist.

11. Rahmen für ein gepolstertes Sitzmöbel nach Anspruch 10, wobei mindestens einer, vorzugsweise sowohl das erste als auch das zweite Giebelteil (8, 10) mit einem entsprechenden Rückenlehnenverbinder (58) versehen ist/sind und wobei das/die entsprechende/-n Ende/-n der Rückenlehne (12) mit einem Giebelverbinder/-n (92) versehen ist/ sind, von denen jeder Giebelverbinder (92) für eine Keilverbindung mit dem jeweiligen Rückenlehnenverbinder (58) des Giebelteils (8, 10) geeignet ist, wobei der/ die Giebelverbinder (92) vorzugsweise im Wesentlichen die Form eines Keils hat/haben.

12. Rahmen für ein gepolstertes Sitzmöbel nach einem der vorhegrehenden Ansprüche, wobei der Sitzrahmenteil (6), erste und zweite Beinteile (8, 10) und eine Rückenlehne (12) des Polstersitzmöbelrahmens (4) dazu ausgelegt sind, in ein quaderförmiges, flaches Paket (2) verpackt zu werden, wobei vorzugsweise das quaderförmige, flache Paket (2) eine Höhe (HT) aufweist, die weniger als 30% einer Breite (WT) des quaderförmigen, flachen Pakets (2) beträgt.

13. Rahmen für ein gepolstertes Sitzmöbel nach einem der vorhergehenden Ansprüche, wobei das erste Beinteil (8) eine vordere und eine hintere Säule (48, 50) aus Metallrohren, vorzugsweise aus Stahlrohren, umfasst.

14. Rahmen für ein gepolstertes Sitzmöbel nach einem der vorhergehenden Ansprüche, wobei die Stützeinrichtung ein Stützhaken (172; 272) umfasst, der dazu geeignet ist, mit einem Gegenstück (139; 239) zusammenzuwirken, das auf dem anderen Teil des Sitzrahmenteils (6) und des ersten Beinteils (8) angeordnet ist.

15. Rahmen für ein gepolstertes Sitzmöbel nach einem der vorhergehenden Ansprüche, wobei das erste Beinteil einen Teil eines ersten Giebels (8) bildet.

16. Gepolstertes Sitzmöbel, **dadurch gekennzeichnet, dass** das gepolsterte Sitzmöbel (130) einen Rahmen für ein gepolstertes Sitzmöbel (4) nach einem der vorhergehenden Ansprüche umfasst.

17. Gepolstertes Sitzmöbel nach Anspruch 16, wobei das gepolsterte Sitzmöbel (130) ferner mindestens ein Rückenlehnenpolsterteil (118), das von einer Rückenlehne (12) des Rahmens für ein gepolstertes Sitzmöbel (4) getragen wird, mindestens ein Sitzpolsterteil (136), das das Sitzrahmenteil (6) mindestens teilweise bedeckt, und einen Bezug (132) umfasst, der das Rückenlehnenpolsterteil (118) bedeckt und von dem Rahmen für ein gepolstertes Sitzmöbel (4) getragen wird.

18. Verfahren zum Montieren eines Rahmens für ein gepolstertes Sitzmöbel, umfassend das Bereitstellen eines Sitzrahmenteils (6), das eine Sitzrahmenstruktur (14, 16, 18, 20) umfasst, die zumindest teilweise aus hohlen Rohren hergestellt ist, das Bereitstellen zumindest eines ersten Beinteils (8), das Einsetzen eines Einführabschnitts (72; 172; 272) einer Stützeinrichtung (72; 172; 272), die entweder an dem Sitzrahmenteil (6) oder dem ersten Beinteil (8) angeordnet ist, in das andere von des Sitzrahmenteils (6) und des ersten Beinteils (8), um das erste Beinteil (8), das an dem Sitzrahmenteil (6) montiert ist, in einem selbststehenden Zwischenmontagezustand auszurichten und zu halten, und Montieren einer Fertigstellungs-Verbindungseinrichtung (76, 78, 80, 38, 104; 238) durch Festziehen einer Fertigstellungs-Verbindungsmontagestange (104), die mit einer Bohrung (46) zusammenwirkt, die in einer Montageplatte (38) angeordnet ist, die an einem von dem Sitzrahmenteil (6) und dem ersten Beinteil (8) angeordnet ist, wobei die Bohrung (46) parallel zu einer Sitzebene des Sitzrahmenteils (6) ist, und mit einer Öffnung (78), die in dem anderen des Sitzrahmenteils (6) und des ersten Beinteils (8) angeordnet ist, um den selbststehenden Zwischenmontagezustand in einen selbststehenden, gebrauchsfertigen Zustand zu überführen.

19. Verfahren nach Anspruch 18, das ferner nach dem Schritt des Montierens einer Fertigstellungs-Verbindungseinrichtung (76, 78, 80, 38, 104; 238), um den selbststehenden Zwischenmontagezustand in einen selbststehenden, gebrauchsfertigen Zustand zu überführen, einen Schritt des Montierens eines zweiten Beinteils (10) an einem gegenüberliegenden Ende (105) des Sitzrahmenteils (6) durch Einführen eines Einführabschnitts (72; 172; 272) einer Stützeinrichtung (72; 172; 272), die entweder an dem Sitzrahmenteil (6) oder dem zweiten Beinteil (10) angeordnet ist, in das andere des Sitzrahmenteils (6) oder des zweiten Beinteils (10), um das zweite Beinteil (10), das an dem Sitzrahmen (6) montiert ist, in einem selbststehenden Zwischenmontagezustand auszurichten und zu halten, und des Montieren einer Endverbindungseinrichtung (76, 78, 80, 38, 104; 238) durch Festziehen einer Fertigstellungs-Verbindungsmontagestange (104), die mit einer Bohrung (46) zusammenwirkt, die in einer Montageplatte (38) angeordnet ist, die an dem Sitzrahmenteil (6) oder dem zweiten Beinteil (10) angeordnet ist, wobei die Bohrung (46) parallel zu einer Sitzebene des Sitzrahmenteils (6) ist, und mit einer Öffnung (78), die in dem anderen des Sitzrahmenteils (6) und des zweiten Beinteils (10) angeordnet ist, um den selbststehenden Zwischenmontagezustand in einen selbststehenden, gebrauchsfertigen Zustand zu überführen, umfasst.

20. Verfahren nach einem der Ansprüche 18 bis 19, das ferner das Anbringen eines ersten und eines zweiten Giebelteils (8, 10) an dem Sitzrahmenteil (6), wobei jeder Giebelteil (8, 10) mit einem Rückenlehnenverbinder (58) versehen ist, das Bereitstellen einer Rückenlehne (12) mit Giebelverbindern (92), die an gegenüberliegenden Enden der Rückenlehne (12) angeordnet sind, wobei jeder Giebelverbinder (92) für eine Keilverbindung mit den Rückenlehnenverbindern (58) geeignet ist, und das Bewegen der Rückenlehne (12) in einer Richtung im Wesentlichen senkrecht zu der Ebene des Sitzrahmenteils (6), um die Giebelverbinder (92) der Rückenlehne (12) mit den Rückenlehnenverbindern (58) der jeweiligen Giebelteile (8, 10) zu verbinden, umfasst.

## Revendications

1. Châssis de mobilier d'assise capitonné comprenant une première partie châssis de siège (6) et au moins une première partie de pied (8) pouvant être reliée à la partie châssis de siège (6),
dans lequel la partie châssis de siège (6) comprend une structure (14, 16, 18, 20) de châssis de siège qui est au moins partiellement constituée de tubes creux, dans lequel au moins l'une de la partie châssis de siège (6) et de la première partie de pied (8) comprend un dispositif de support (72 ; 172 ; 272) conçu pour un alignement et une liaison temporaire de l'au moins une de la partie châssis de siège (6) et de la première partie de pied (8) avec l'autre de la partie châssis de siège (6) et de la première partie de pied (8), le dispositif de support (72 ; 172 ; 272) comprenant une partie d'introduction (72 ; 172 ; 272) disposée sur l'une de la partie châssis de siège (6) et de la première partie de pied (8) et conçue pour une introduction dans l'autre de la partie châssis de siège (6) et de la première partie de pied (8) pour aligner et maintenir la première partie de pied (8) montée sur la partie châssis de siège (6) dans un état d'assemblage intermédiaire autoporteur, dans lequel au moins l'une de la partie châssis de siège (6) et de la première partie de pied (8) comprend au moins des parties d'un dispositif de liaison finale (76, 78, 80, 38, 104 ; 238) comprenant : i) une plaque de montage (38) comprenant un alésage (46) parallèle à un plan d'assise de la partie châssis de siège (6), la plaque de montage (38) étant disposée dans l'une de la partie châssis de siège (6) et de la première partie de pied (8), ii) une ouverture (78) ménagée dans l'autre de la partie châssis de siège (6) et de la première partie de pied (8), et iii) une tige de montage de liaison finale (104) conçue pour coopérer avec l'ouverture (78) et avec l'alésage (46) ménagé dans la plaque de montage (38), la tige (104) étant conçue pour un serrage ayant pour objet d'amener une force de serrage appliquée à la partie châssis de siège (6) et à la première partie de pied (8) à agir dans la direction longitudinale de la tige (104) à des fins de liaison finale de la première partie de pied (8) et de la partie châssis de siège (6) et pour une transformation de l'état d'assemblage intermédiaire autoporteur en un état autoporteur prêt à être utilisé.

2. Châssis de mobilier d'assise capitonné selon la revendication 1, dans lequel le dispositif de support (72 ; 172 ; 272) est au moins partiellement séparé du dispositif de liaison finale (76, 78, 80, 38, 104 ; 238).

3. Châssis de mobilier d'assise capitonné selon l'une ou l'autre des revendications précédentes, dans lequel le dispositif de support (72 ; 172 ; 272) et le dispositif de liaison finale (76, 78, 80, 38, 104 ; 238) coopèrent pour la liaison finale de la première partie de pied (8) et du châssis de siège (6).

4. Châssis de mobilier d'assise capitonné selon l'une quelconque des revendications précédentes, dans lequel la partie d'introduction (72 ; 172 ; 272) est fixée de manière permanente à celle de la partie châssis de siège (6) et de la première partie de pied (8) sur laquelle est disposée la partie d'introduction (72 ; 172 ; 272).

5. Châssis de mobilier d'assise capitonné selon l'une quelconque des revendications précédentes, dans lequel la plaque de montage (38) est disposée dans l'intérieur creux (36) d'un tube creux (14) de la partie châssis de siège (6), et dans lequel l'ouverture (78) est ménagée dans la première partie de pied (8), la direction longitudinale de la tige (104) coïncidant préférablement, dans l'état autoporteur prêt à être utilisé, avec la direction longitudinale du tube creux (14) de la partie châssis de siège (6), à laquelle est relié le tube creux (14) de la tige (104) par le biais de la plaque de montage (38) .

6. Châssis de mobilier d'assise capitonné selon l'une quelconque des revendications précédentes, dans lequel l'alésage (46) de la plaque de montage (38) est un alésage taraudé (46) conçu pour coopérer avec une tige filetée (108) de la tige (104), la tige de montage de liaison finale (104) étant préférablement un boulon (104), dans lequel l'ouverture (78) est plus petite qu'une tête (106) du boulon (104) et est conçue pour coopérer avec la tête (106) pendant le serrage du boulon (104).

7. Châssis de mobilier d'assise capitonné selon l'une quelconque des revendications précédentes, comprenant une seconde partie de pied (10) conçue pour être reliée à la partie châssis de siège (6) au niveau de son extrémité opposée (105), par comparaison à la première partie de pied (8), dans lequel au moins l'une de la partie châssis de siège (6) et de la seconde partie de pied (10) comprend un dispositif de support (72 ; 172 ; 272) conçu pour un alignement et une liaison temporaire de l'au moins une partie de la partie châssis de siège (6) et de la seconde partie de pied (10) avec l'autre de la partie châssis de siège (6) et de la seconde partie de pied (10), le dispositif de support (72 ; 172 ; 272) comprenant une partie d'introduction (72 ; 172 ; 272) disposée sur l'une de la partie châssis de siège (6) et de la seconde partie de pied (10) et conçue pour une introduction dans l'autre de la partie châssis de siège (6) et de la seconde partie de pied (10) pour aligner et maintenir la seconde partie de pied (10) montée sur la partie châssis de siège (6) dans un état d'assemblage intermédiaire autoporteur, et dans lequel au moins l'une de la partie châssis de siège (6) et de la seconde partie de pied (10) comprend un dispositif de liaison finale (76, 78, 80, 38, 104 ; 238) comprenant : i) une plaque de montage (38) comprenant un alésage (46) parallèle à un plan d'assise de la partie châssis de siège (6), la plaque de montage (38) étant disposée dans l'une de la partie châssis de siège (6) et de la seconde partie de pied (10), ii) une ouverture (78) ménagée dans l'autre de la partie châssis de siège (6) et de la seconde partie de pied (10), et iii) une tige de montage de liaison finale (104) conçue pour coopérer avec l'ouverture (78) et avec l'alésage (46) ménagé dans la plaque de montage (38), la tige (104) étant conçue pour un serrage ayant pour objet d'amener une force de serrage appliquée à la partie châssis de siège (6) et à la seconde partie de pied (10) à agir dans la direction longitudinale de la tige (104) à des fins de liaison finale de la seconde partie de pied (10) et de la partie châssis de siège (6) et pour transformer l'état d'assemblage intermédiaire autoporteur en un état autoporteur prêt à être utilisé.

8. Châssis de mobilier d'assise capitonné selon l'une quelconque des revendications précédentes, dans lequel la structure (14, 16, 18, 20) de châssis de siège est au moins partiellement constituée de tubes creux conçus à partir d'un matériau sélectionné parmi : l'acier, l'aluminium, le plastique et des composites, tels que des polymères renforcés de fibres, par exemple de fibres de verre et de matière plastique renforcée de carbone, les tubes creux ayant préférablement une section transversale rectangulaire, la section transversale rectangulaire ayant préférablement une largeur maximale dans la direction verticale.

9. Châssis de mobilier d'assise capitonné selon l'une quelconque des revendications précédentes, dans lequel la partie châssis de siège (6) comprend une barre avant (14) de châssis de siège, une barre arrière (16) de châssis de siège, une première barre latérale (18) de châssis de siège et une seconde barre latérale (20) de châssis de siège qui sont toutes constituées de tubes métalliques, on préfère davantage de tubes en acier.

10. Châssis de mobilier d'assise capitonné selon l'une quelconque des revendications précédentes, dans lequel des première et seconde parties de côté (8, 10) peuvent être reliées à des extrémités opposées (103, 105) de la partie châssis de siège (6), dans lequel un dossier (12) du châssis de mobilier d'assise capitonné (4) est conçu pour être relié aux première et seconde parties de côté (8, 10).

11. Châssis de mobilier d'assise capitonné selon la revendication 10, dans lequel au moins l'une, préférablement les deux, des première et seconde parties de côté (8, 10) sont pourvues d'un dispositif de liaison respectif (58) de dossier, et dans lequel la ou les extrémités correspondantes du dossier (12) sont pourvues d'un dispositif de liaison de côté (92), chacun des dispositifs de liaison (92) de côté étant conçu pour une liaison par coinçage avec le dispositif de liaison respectif (58) de dossier de la partie de côté (8, 10), le ou les dispositifs de liaison de côté (92) ayant préférablement la forme globale d'un coin.

12. Châssis de mobilier d'assise capitonné selon l'une quelconque des revendications précédentes, dans lequel la partie châssis de siège (6), les première et seconde parties pieds (8, 10) et un dossier (12) du châssis de mobilier d'assise capitonné (4) sont conçus pour être emballés sous forme de paquet plat de forme parallélépipédique (2), le paquet plat de forme parallélépipédique (2) ayant préférablement une hauteur (HT) inférieure à 30 % d'une largeur (WT) du paquet plat de forme parallélépipédique (2).

13. Châssis de mobilier d'assise capitonné selon l'une quelconque des revendications précédentes, dans lequel la première partie de pied (8) comprend un pied avant et un pied arrière (48, 50) constitués de tubes métalliques, préférablement à base de tubes en acier.

14. Châssis de mobilier d'assise capitonné selon l'une quelconque des revendications précédentes, dans lequel le dispositif de support comprend un crochet de support (172 ; 272) conçu pour coopérer avec une partie complémentaire (139 ; 239) disposée sur l'autre de la partie châssis de siège (6) et de la première partie de pied (8).

15. Châssis de mobilier d'assise capitonné selon l'une quelconque des revendications précédentes, dans lequel la première partie de pied fait partie d'un premier côté (8).

16. Élément d'assise capitonné de mobilier, **caractérisé en ce que** l'élément d'assise capitonné de mobilier (130) comprend un châssis de mobilier d'assise capitonné (4) selon l'une quelconque des revendications précédentes.

17. Élément d'assise capitonné de mobilier selon la revendication 16, dans lequel l'élément d'assise capitonné de mobilier (130) comprend en outre au moins une pièce capitonnée (118) de dossier supportée par un dossier (12) du châssis de mobilier d'assise capitonné (4), au moins un élément capitonné d'assise (136) couvrant au moins partiellement la partie châssis de siège (6), et un élément de recouvrement (132) recouvrant l'élément capitonné (118) de dossier et supporté par le châssis de mobilier d'assise capitonné (4).

18. Procédé de montage d'un châssis de mobilier d'assise capitonné, comprenant les étapes consistant à utiliser une partie châssis de siège (6) qui comprend une structure (14, 16, 18, 20) de châssis de siège qui est au moins partiellement constituée de tubes creux, à utiliser au moins une première partie de pied (8), à introduire une partie d'introduction (72 ; 172 ; 272) d'un dispositif de support (72 ; 172 ; 272) disposé sur l'une de la partie châssis de siège (6) et de la première partie de pied (8) dans l'autre de la partie châssis de siège (6) et de la première partie de pied (8) pour aligner et maintenir la première partie de pied (8) montée sur la partie châssis de siège (6) dans un état d'assemblage intermédiaire autoporteur, et à monter un dispositif de liaison finale (76, 78, 80, 38, 104 ; 238) par serrage d'une tige de montage de liaison finale (104) coopérant avec un alésage (46) ménagé dans une plaque de montage (38) disposée sur l'une de la partie châssis de siège (6) et de la première partie de pied (8), l'alésage (46) étant parallèle à un plan d'assise de la partie châssis de siège (6), et avec une ouverture (78) ménagée dans l'autre de la partie châssis de siège (6) et de la première partie de pied (8), pour transformer l'état d'assemblage intermédiaire autoporteur en un état autoporteur prêt à être utilisé.

19. Procédé selon la revendication 18, comprenant en outre, postérieurement à l'étape de montage d'un dispositif de liaison finale (76, 78, 80, 38, 104 ; 238) de transformation de l'état d'assemblage intermédiaire autoporteur à un état autoporteur prêt à être utilisé, une étape consistant à monter une seconde partie de pied (10) au niveau d'une extrémité opposée (105) de la partie châssis de siège (6) par une introduction d'une partie d'introduction (72 ; 172 ; 272) d'un dispositif de support (72 ; 172 ; 272) disposé sur l'une de la partie châssis de siège (6) et de la seconde partie de pied (10) dans l'autre de la partie châssis de siège (6) et de la seconde partie de pied (10) pour aligner et maintenir la seconde partie de pied (10) montée sur le châssis de siège (6) dans un état d'assemblage intermédiaire autoporteur, et à monter un dispositif de liaison finale (76, 78, 80, 38, 104 ; 238) par un serrage d'une tige de montage de liaison finale (104) coopérant avec un alésage (46) ménagé dans une plaque de montage (38) disposée sur l'une de la partie châssis de siège (6) et de la seconde partie de pied (10), l'alésage (46) étant parallèle à un plan d'assise de la partie châssis de siège (6), et avec une ouverture (78) ménagée dans l'autre de la partie châssis de siège (6) et de la seconde partie de pied (10), pour transformer l'état d'assemblage intermédiaire autoporteur en un état autoporteur prêt à être utilisé.

20. Procédé selon l'une ou l'autre des revendications 18 et 19, comprenant en outre les étapes consistant à monter des première et seconde parties de côté (8, 10) sur la partie châssis de siège (6), chaque partie de côté (8, 10) étant pourvue d'un dispositif de liaison (58) de dossier, à disposer un dossier (12) comportant des dispositifs de liaison (92) de côté disposés sur des extrémités opposées du dossier (12), chaque dispositif de liaison (92) de côté étant conçu pour une liaison par coinçage avec les dispositifs de liaison (58) de dossier, et à déplacer le dossier (12) dans une direction sensiblement perpendiculaire au plan de la partie châssis de siège (6) de façon à provoquer une liaison des dispositifs de liaison (92) de côté du dossier (12) avec les dispositifs de liaison (58) de dossier des parties de côté respectives (8, 10).
